# EUROPÄISCHE PATENTANMELDUNG

(11) **EP 1 568 512 A1**
(43) Veröffentlichungstag der Anmeldung: **31.08.2005**
(21) Anmeldenummer: 04004300.2
(22) Anmeldetag: 26.02.2004
(51) Int. Cl.: B60C 3/04, B60C 11/00

(54) **Fahrzeugluftreifen**

(71) Anmelder: Continental Aktiengesellschaft, 30165 Hannover (DE)
(72) Erfinder: Schulze, Thomas, Dr., 30171 Hannover (DE); Kachel, Uwe, 38527 Meine (DE); Cordlandwehr, Volker, 33775 Versmold (DE)

(57) **Zusammenfassung**

Fahrzeugluftreifen mit einer Querschnittshöhe H₂ des Fahrzeugluftreifens, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW}, wobei die Laufstreifenbreite T_{RW} und die Querschnittshöhe H₂ Werte sind, die der Reifen auf der nach der E.T.R.T.O. von 2004 zugeordneten Meßfelge mit Felgenmaulweite C_{RW} im unbelasteten Zustand unter Normdruck aufweist,
**dadurch gekennzeichnet,**
dass die Reifenbreite auf der nach der E.T.R.T.O. von 2004 zugeordneten Meßfelge von der Lauffläche nach radial innen bis zu einer radialen Position im radialen Abstand H₁ von der Sitzfläche auf der Messfelge mit H₁ = H₂/2 kontinuierlich zunimmt und in der radialen Position H₁ die Reifenbreite T_{W} einnimmt,
wobei für die Laufstreifenbreite T_{RW}, die Reifenbreite T_{W} und die Felgenmaulweite C_{RW} der nach der E.T.R.T.O. von 2004 zugeordneten Meßfelge die Beziehung gilt:
(T_{RW}-C_{RW})≤0mm und (T_{W}-C_{RW})≤35mm.

## Beschreibung

Die Erfindung betrifft einen Fahrzeugluftreifen mit einer Karkasse -insbesondere radialer Bauart -, mit insbesondere einem Gürtel, mit einem profilierten Laufstreifen mit Lauffläche, die sich axial von Reifenschulter zu Reifenschulter erstreckt, mit zwei Wulstbereichen mit Wulstkern zur Befestigung des Fahrzeugluftreifens auf einer Felge, mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW}, die in den die Reifenachse beinhaltenden Querschnittsebenen dem axialen Abstand zwischen den beiden Schnittpunkten aus Krümmungskreis mit Krümmungsradius R₁ der beiden Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der nach dem Standards Manual der E.T.R.T.O. von 2004 zugeordneten Meßfelge mit Felgenmaulweite C_{RW} im unbelasteten Zustand unter Normdruck aufweist, sowie ein Rad-Reifensystem mit einer Felge und einem auf deren radialen Außenseite montierten Fahrzeugluftreifen mit einer Karkasse -insbesondere radialer Bauart -, mit insbesondere einem Gürtel, mit einem profilierten Laufstreifen mit Lauffläche, die sich axial von Reifenschulter zu Reifenschulter erstreckt, mit zwei Wulstbereichen mit Wulstkern zur Befestigung des Fahrzeugluftreifens auf der Felge, mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW} , die in den die Reifenachse beinhaltenden Querschnittsebenen dem axialen Abstand zwischen den beiden Schnittpunkten aus Krümmungskreis mit Krümmungsradius R₁ der beiden
Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der Felge mit Felgenmaulweite C_{RW} im unbelasteten Zustand unter Normdruck aufweist.

Messfelgen nach E.T.R.T.O. von 2004 sind die laut Standards Manual 2004 von ETRTO (European Tyre and Rim Technical Organisation), Avenue Brugmann 32/2, 1060 Brussels, Belgium für Fahrzeugluftreifen genormten Messfelgen.

Bei derartigen Fahrzeugluftreifen bewirkt die zwecks guten Komforteigenschaften im radial äußeren Seitenwandbereich flexibel ausgebildete Reifenseitenwand beim schnellen dynamischen Lastwechsel der Seitenkräfte ein durch flexible Deformation der Seitenwand verzögertes Übertragen der zwischen Straße und Felge zu übertragenden Seitenkräfte. Dies geht üblicherweise zu Lasten der Handling-Eigenschaften.

Der Erfindung liegt die Aufgabe zugrunde, die Handling-Eigenschaften deratiger Rad-Reifensysteme zu verbessern.

Die Aufgabe wird erfindungsgemäß durch die Ausbildung eines Fahrzeugluftreifens mit einer Karkasse -insbesondere radialer Bauart -, mit insbesondere einem Gürtel, mit einem profilierten Laufstreifen mit Lauffläche, die sich axial von Reifenschulter zu Reifenschulter erstreckt, mit zwei Wulstbereichen mit Wulstkern zur Befestigung des Fahrzeugluftreifens auf einer Felge, mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW} , die in den die Reifenachse beinhaltenden Querschnittsebenen dem axialen Abstand zwischen den beiden Schnittpunkten aus Krümmungskreis mit Krümmungsradius R₁ der beiden
Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der nach der E.T.R.T.O. von 2004 zugeordneten Meßfelge mit Felgenmaulweite C_{RW} im unbelasteten Zustand unter Normdruck aufweist, gemäß den Merkmalen von Anspruch 1 gelöst, bei der die Reifenbreite auf der nach der E.T.R.T.O. von 2004 zugeordneten Meßfelge von der Lauffläche nach radial innen bis zu einer radialen Position im radialen Abstand H₁ von der Sitzfläche auf der Felge mit H₁ = H₂ /2 kontinuierlich zunimmt und in der radialen Position H₁ die Reifenbreite T_{W} einnimmt, wobei für die Laufstreifenbreite T_{RW}, die Reifenbreite T_{W} und die Felgenmaulweite C_{RW} der nach der E.T.R.T.O. von 2004 zugeordneten Meßfelge die Beziehung gilt: (T_{RW}-C_{RW}) ≤ 0mm und (T_{W} - C_{RW}) ≤ 35mm. Ebenso wird die Aufgabe erfindungsgemäß durch die Ausbildung eines Rad-Reifensystems mit einer Felge und einem auf deren radialen Außenseite montierten Fahrzeugluftreifen mit einer Karkasse -insbesondere radialer Bauart -, mit insbesondere einem Gürtel, mit einem profilierten Laufstreifen mit Lauffläche, die sich axial von Reifenschulter zu Reifenschulter erstreckt, mit zwei Wulstbereichen mit Wulstkern zur Befestigung des Fahrzeugluftreifens auf der Felge, mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW}, die in den die Reifenachse beinhaltenden Querschnittsebenen dem axialen Abstand zwischen den beiden Schnittpunkten aus Krümmungskreis mit Krümmungsradius R₁ der beiden Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der Felge mit Felgenmaulweite C_{RW} im unbelasteten Zustand unter Normdruck aufweist, gemäß den Merkmalen von Anspruch 5 gelöst, bei dem die Reifenbreite auf der Felge von der Lauffläche nach radial innen bis zu einer radialen Position im radialen Abstand H₁ von der Sitzfläche auf der Felge mit H₁ = H₂ /2 kontinuierlich zunimmt und in der radialen Position H₁ die Reifenbreite T_{W} einnimmt, wobei für die Laufstreifenbreite T_{RW}, die Reifenbreite T_{W} und die Felgenmaulweite C_{RW} der Felge die Beziehung gilt: (T_{RW}-C_{RW}) ≤ 0mm und (Tw - C_{RW}) ≤ 35mm. Hierdurch wird eine sehr kurze, steife Anbindung des Laufstreifens an den Wulstbereich des Fahrzeugluftreifens und der Felge ermöglicht, wobei besonders in dem radial äußeren Seitenwandbereich trotz Flexibilität der Seitenwand schnelle und direkte Krafteinleitung zwischen Felge und Straßenoberfläche der beim Handling wesentlichen dynamisch wechselnden Seitenkräfte ermöglicht wird.

Bevorzugt ist eine Ausbildung gemäß den Merkmalen der Ansprüche 2 oder 6, wobei für die Differenz aus Laufstreifenbreite T_{RW} minus Felgenmaulweite C_{RW} gilt: 0 ≥ (T_{RW}-C_{RW}) ≥ (- 35mm).

Besonders vorteilhaft ist die Ausbildung gemäß den Merkmalen der Ansprüche 3 oder 7, wobei für die Differenz aus Reifenbreite T_{W} minus Felgenmaulweite C_{RW} gilt: 10mm ≤ (T_{W} - C_{RW}) ≤ 35mm.

Besonders vorteilhaft ist die Ausbildung gemäß den Merkmalen der Ansprüche 4 oder 8, wobei das Querschnittsverhältnis des Fahrzeugluftreifens kleiner oder gleich 0,6 ist.

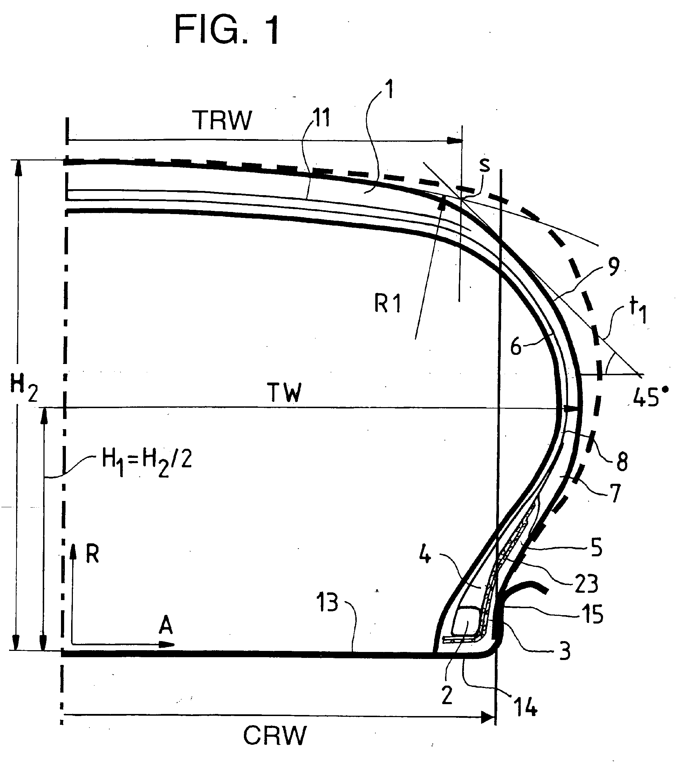

Die Erfindung wird im Folgenden an Hand des in Figur 1 dargestellten Ausführungsbeispiels näher erläutert. Hierin zeigt
- Fig. 1:: schematische Querschnittsdarstellung eines Fahrzeugrades mit Felge und darauf montiertem Fahrzeugluftreifen längs einer Querschnittsebene, die die Achse des Fahrzeugluftreifens beinhaltet.

Figur 1 zeigt ein Rad-Reifensystem mit Fahrzeugluftreifen und Standardfelge 13. In Fig. 1 ist der Aufbau eines auf die Felge 13 montierten Fahrzeugluftreifens beispielhaft dargestellt, wobei aus Symmetriegründen der Einfachheit halber lediglich die rechte Seite dargestellt ist. Um einen rechten Wulstkern 2 mit Kernprofil 4 ist eine Karkasse 8 bekannter Art mit einer oder mehreren Karkassenlagen radialer Bauart mit im Wesentlichen radial verlaufenden Festigkeitsträgern, die außerhalb einer luftundurchlässigen Innenschicht 6 über den rechten Schulterbereich und die Zenitebene zu dem linken Schulterbereich und den linken Wulstkern 2 mit Kernprofil 4 reicht, um den sie in herkömmlicher Weise gelegt ist. In herkömmlicher Weise ist im Kernbereich jeweils über einen Wulststreifen 23 und den Wulstverstärker 3 ein Hornprofil 5 und von diesem ausgehend bis in den Schulterbereich reichend ein Seitenwandstreifen 7 aufgelegt. Über den Umfang des Reifens reichen außerhalb der Karkasse 8 radialer Bauart angeordnet ein Gürtel 11 aus beispielsweise zwei oder mehr Stahlgürtellagen bekannter Art mit in Kautschuk eingebetteten Stahlkorden. Den Abschluss des Reifenaufbaus bildet in bekannter Weise ein mit profilierter Lauffläche ausgebildeter Laufstreifen 1.

In Figur 1 ist die axiale Richtung A des Fahrzeugluftreifens mit Pfeildarstellung eingetragen. Die radiale Richtung R des Fahrzeugluftreifens ist ebenfalls mit Pfeildarstellung angegeben, wobei die Pfeilrichtung von radial innen nach radial außen weist.

Der Fahrzeugluftreifen ist auf der radialen Außenseite der Felge 13 in herkömmlicher Weise montiert. Hierzu ist die Felge an ihren axialen Enden jeweils an ihrer radialen Außenseite mit einer Sitzfläche 14 und mit einem radial nach außen erstreckten Felgenhorn 15 bekannter Art ausgebildet. Im montierten Betriebszustand sitzt der Fahrzeugluftreifen mit der radialen Innenseite seines Wulstbereichs auf der Sitzfläche 14 und stützt sich mit dem Wulstbereich nach axial außen am Felgenhorn 15 ab.

Der Fahrzeugluftreifen weist im montierten, unbelasteten Betriebszustand unter NormBetriebsdruck eine Querschnittshöhe H₂ , die die maximale radiale Erstreckung zwischen Sitzfläche auf der Felge 13 und dem Scheitel der Lauffläche des Fahrzeugluftreifens darstellt, sowie eine maximale Breite B seiner Außenkontur 9 auf. Der Fahrzeugluftreifen ist mit einem niederen Querschnittsverhältnis ausgebildet, beispielsweise mit einem Querschnittsverhältnis, das kleiner oder gleich 0,6 ist. Die radiale Außenkontur der Lauffläche ist mit einer Krümmung ausgebildet. In jeder Laufflächenschulter ist die radiale Außenkontur der Lauffläche in den die Reifenachse beinhaltenden Querschnittsebenen mit einem Krümmungsradius R₁ um einen Krümmungsmittelpunkt radial innerhalb der Lauffläche gekrümmt. In Figur 1 ist an die Außenkontur des radial äußeren Seitenwandbereichs die Tangente t₁ an den radial äußeren Seitenwandbereich der an die Reifenschulter angrenzenden Reifenseitenwand, die einen Steigungswinkel von von 45° zur Radialen aufweist eingetragen, ebenso der Schnittpunkt S aus dem Krümmungsbogen mit Krümmungsradius R₁ Reifenschulter und der Tangente t₁ der angrenzenden Reifenseitenwand. Der Laufstreifen weist eine Laufstreifenbreite T_{RW} auf, wobei die Laufstreifenbreite T_{RW} der axiale Abstand zwischen den beiden Schnittpunkten S ist. Der Fahrzeugluftreifen ist mit der Laufstreifenbreite T_{RW} der Lauffläche ausgebildet, die der auf die Felge mit Felgenmaulweite C_{RW} montierte Fahrzeugluftreifen unter Normbetriebsdruck aufweist. Die Breite der Außenkontur 9 des auf der Felge mit Felgenmaulweite C_{RW} montierten Fahrzeugluftreifens unter Normbetriebsdruck nimmt von der Lauffläche nach radial innen bis zu einer radialen Position im radialen Abstand H₁ von der Sitzfläche auf der Felge mit H₁ = H₂ /2 kontinuierlich zu. In der radialen Position H₁ hat der Fahrzeugluftreifen an seiner Außenkontur 9 die Reifenbreite T_{W}. Die Laufstreifenbreite T_{RW}, die Reifenbreite T_{W} und die Felgenmaulweite C_{RW} der Felge 13 sind so ausgebildet, dass für ihre Beziehung zueinander gilt: (T_{RW}-C_{RW}) ≤ 0mm und (T_{W} - C_{RW}) ≤ 35mm.

In einem weiteren Ausführungsbeispiel ist die Laufstreifenbreite T_{RW} und die Felgenmaulweite C_{RW} so ausgebildet, dass zusätzlich für die Differenz aus Laufstreifenbreite T_{RW} minus Felgenmaulweite gilt: C_{RW}: 0 ≥ (T_{RW}-C_{RW}) ≥ (- 35mm)..

In einem weiteren Ausführungsbeispiel sind die Reifenbreite T_{W} und die Felgenmaulweite C_{RW} so ausgebildet, dass für die Differenz aus Reifenbreite T_{W} minus Felgenmaulweite C_{RW} gilt: 10mm ≤ (T_{W} - C_{RW}) ≤ 35mm.

Im oberen Seitenwandbereich zwischen Laufstreifen und der radialen Position H₁ ist - wie in Fig. 1 dargestellt - der Fahrzeugluftreifen mit einem von radial außen nach radial innen kontinuierlich zunehmende axialen Abstand der äußere Kontur 9 der rechten Seitenwand zur äußeren Kontur 9 der linken, nicht dargestellten Seitenwand ausgebildet.

In Figur 1 ist in gestrichelter Darstellung die Außenkontur eines herkömmlichen Fahrzeugluftreifens auf der Felge 13 dargestellt.

Auch wenn die beschriebenen und dargestellten Ausführungsformen an Hand eines Rad-Reifensystem mit Fahrzeugluftreifen und zugeordneter Standardfelge 13 erfolgte, sind die Ausführungsbeispiele auch mit einem Fahrzeugluftreifen möglich, dessen Dimensionsauslegung an Hand der zu diesem Fahrzeugluftreifen nach E.T.R.T.O. von 2004 zugeordneten Messfelge mit einer Felgenmaulweite C_{RW} erfolgt. Messfelgen nach E.T.R.T.O. von 2004 sind die laut Standards Manual 2004 von ETRTO (European Tyre and Rim Technical Organisation), Avenue Brugmann 32/2, 1060 Brussels, Belgium für Fahrzeugluftreifen genormten Messfelgen. In diesem Fall sind die Laufstreifenbreite T_{RW} und die Reifenbreite T_{W} des Fahrzeugluftreifens so ausgelegt, dass für die Beziehung zwischen Laufstreifenbreite T_{RW}, Reifenbreite T_{W} und die Felgenmaulweite C_{RW} der zugeordneten Messfelge 13 gilt: (T_{RW}-C_{RW}) ≤ 0mm und (T_{W} - C_{RW}) ≤ 35mm.

In einem weiteren Ausführungsbeispiel ist die Laufstreifenbreite T_{RW} so ausgebildet, dass zusätzlich für die Differenz aus Laufstreifenbreite T_{RW} minus Felgenmaulweite der zugeordneten Messfelge gilt: C_{RW} : 0 ≥ (T_{RW}-C_{RW}) ≥ (- 35mm)..

In einem weiteren Ausführungsbeispiel ist die Reifenbreite T_{W} so ausgebildet, dass für die Differenz aus Reifenbreite T_{W} minus Felgenmaulweite C_{RW} der zugeordneten Messfelge gilt: 10mm ≤ (T_{W} - C_{RW}) ≤ 35mm.

### Bezugszeichenliste

### (Teil der Beschreibung)

- 1: Laufstreifen
- 2: Kern
- 3: Wulstverstärker
- 4: Kernprofil
- 5: Hornprofil
- 6: Innenschicht
- 7: Seitenstreifen
- 8: Karkasse
- 9: Außenkontur
- 10 11: Gürtel
- 12 13: Felge
- 14: Sitzfläche
- 15: Felgenhorn
- 16 23: Wulststreifen
24

## Patentansprüche

1. Fahrzeugluftreifen mit einer Karkasse -insbesondere radialer Bauart -, mit insbesondere einem Gürtel (11), mit einem profilierten Laufstreifen (1) mit Lauffläche, die sich axial von Reifenschulter zu Reifenschulter erstreckt, mit zwei Wulstbereichen mit Wulstkern (2) zur Befestigung des Fahrzeugluftreifens auf einer Felge, mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW} , die in den die Reifenachse beinhaltenden Querschnittsebenen dem axialen Abstand zwischen den beiden Schnittpunkten aus Krümmungskreis mit Krümmungsradius R₁ der beiden Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der nach dem Standards Manual der E.T.R.T.O. von 2004 zugeordneten Meßfelge mit Felgenmaulweite C_{RW} im unbelasteten Zustand unter Normdruck aufweist,
**dadurch gekennzeichnet, dass** die Reifenbreite auf der nach dem Standards Manual der E.T.R.T.O. von 2004 zugeordneten Meßfelge von der Lauffläche nach radial innen bis zu einer radialen Position im radialen Abstand H₁ von der Sitzfläche auf der Messfelge mit H₁ = H₂ /2 kontinuierlich zunimmt und in der radialen Position H₁ die Reifenbreite T_{W} einnimmt, wobei für die Laufstreifenbreite T_{RW}, die Reifenbreite T_{W} und die Felgenmaulweite C_{RW} der nach der E.T.R.T.O. von 2004 zugeordneten Meßfelge die Beziehung gilt: (T_{RW}-C_{RW}) ≤ 0mm und (T_{W} - C_{RW}) ≤ 35mm.

2. Fahrzeugluftreifen gemäß den Merkmalen von Anspruch 1,
wobei für den Betrag der Differenz aus Laufstreifenbreite T_{RW} minus Felgenmaulweite C_{RW} der nach der E.T.R.T.O. von 2004 zugeordneten Meßfelge gilt: 0 ≥ (T_{RW}-C_{RW}) ≥ (- 35mm)..

3. Fahrzeugluftreifen gemäß den Merkmalen von Anspruch 1 oder 2,
wobei für die Differenz aus Reifenbreite T_{W} minus Felgenmaulweite C_{RW} gilt: 10mm ≤ (T_{W} - C_{RW}) ≤ 35mm.

4. Fahrzeugluftreifen gemäß den Merkmalen von einem oder mehreren der Ansprüche 1 bis 3,
wobei das Querschnittsverhältnis des Fahrzeugluftreifens kleiner oder gleich 0,6 ist.

5. Rad-Reifensystem mit einer Felge und einem auf deren radialen Außenseite montierten Fahrzeugluftreifen mit einer Karkasse -insbesondere radialer Bauart -, mit insbesondere einem Gürtel (11), mit einem profilierten Laufstreifen (1) mit Lauffläche, die sich axial von Reifenschulter zu Reifenschulter erstreckt, mit zwei Wulstbereichen mit Wulstkern (2) zur Befestigung des Fahrzeugluftreifens auf der Felge (13), mit zwei Reifenseitenwänden, die sich radial jeweils zwischen einem Wulstbereich und dem Laufstreifen erstrecken, mit einer Querschnittshöhe H₂ des Fahrzeugluftreifens, die die maximale radiale Erstreckung zwischen Sitzfläche auf der Felge (13) und dem Scheitel der Lauffläche des Fahrzeugluftreifens darstellt, mit einer Krümmung der radialen Außenkontur der Lauffläche in jeder Laufflächenschulter mit einem Krümmungsradius R₁ in den die Reifenachse beinhaltenden Querschnittsebenen, mit einer Laufstreifenbreite T_{RW} , die in den die Reifenachse beinhaltenden Querschnittsebenen dem axialen Abstand zwischen den beiden Schnittpunkten aus Krümmungskreis mit Krümmungsradius R₁ der beiden Reifenschultern und derjenigen Tangente t₁ an den radial äußeren Seitenwandbereich der jeweils angrenzenden Reifenseitenwand mit einem Steigungswinkel von 45° zur Radialen entspricht, wobei die Laufstreifenbreite T_{RW} und die Querschnittshöhe H₂ Werte sind, die der Reifen auf der Felge (13) mit Felgenmaulweite C_{RW} im unbelasteten Zustand unter Normdruck aufweist,
**dadurch gekennzeichnet, dass** die Reifenbreite auf der Felge (13) von der Lauffläche nach radial innen bis zu einer radialen Position im radialen Abstand H₁ von der Sitzfläche auf der Felge (13) mit H₁ = H₂ /2 kontinuierlich zunimmt und in der radialen Position H₁ die Reifenbreite T_{W} einnimmt,
wobei für die Laufstreifenbreite T_{RW}, die Reifenbreite T_{W} und die Felgenmaulweite C_{RW} der Felge (13) die Beziehung gilt: (T_{RW}-C_{RW}) ≤ 0mm und (T_{W} - C_{RW}) ≤ 35mm.

6. Rad-Reifensystem gemäß den Merkmalen von Anspruch 5,
wobei für den Betrag der Differenz aus Laufstreifenbreite T_{RW} minus Felgenmaulweite C_{RW} der Felge (13) gilt: 0 ≥ (T_{RW}-C_{RW}) ≥ (- 35mm).

7. Rad-Reifensystem gemäß den Merkmalen von Anspruch 5 oder 6,
wobei für die Differenz aus Reifenbreite T_{W} minus Felgenmaulweite C_{RW} gilt: 10mm ≤ (T_{W} - C_{RW}) ≤ 35mm.

8. Rad-Reifensystem gemäß den Merkmalen von einem oder mehreren der Ansprüche 5 bis 7,
wobei das Querschnittsverhältnis des Fahrzeugluftreifens kleiner oder gleich 0,6 ist.
